# DEMANDE DE BREVET EUROPEEN

(11) **EP 0 933 658 A1**
(43) Date de publication de la demande: **04.08.1999**
(21) Numéro de dépôt: 99400180.8
(22) Date de dépôt: 26.01.1999
(51) Int. Cl.: G02B 6/30, G02B 6/42

(54) **Procédé passif de connectorisation d'éléments optiques avec un circuit d'optique integrée et gabarit pour la mise en oeuvre du procédé**

(30) Priorité: 28.01.1998 FR 9800898
(71) Demandeur: COMMISSARIAT A L'ENERGIE ATOMIQUE, 75015 Paris (FR)
(72) Inventeur: Ollier, Eric, 38000 Grenoble (FR); Devoldere, Nicole, 22710 Pen Venan (FR); Pavy, Dominique, 22300 Lannion (FR); Fontaine, Sébastian, 38430 Moirans (FR)
(74) Mandataire: Des Termes, Monique

(57) **Abrégé**

L'invention concerne un procédé de connectorisation d'éléments optiques avec un circuit en optique intégrée (26) consistant à connecter à ce circuit au moins un élément optique de façon à ce que les sorties et/ou les entrées respectives soient situées sensiblement dans un même plan (xoz) que des entrées et/ou des sorties de ce circuit en optique intégrée (26) situées également dans un même plan (xoz). Ce procédé comporte les étapes suivantes :
- on positionne le circuit (26) sur un gabarit (35) ayant des motifs aptes à permettre un alignement précis ultérieur des éléments optiques avec les entrées et/ou les sorties du circuit (26) ;
- on positionne au moins un bloc (29, 30), apte à recevoir le ou les éléments optiques, sur le gabarit en regard des entrées et/ou des sorties du circuit (26), et on le fixe au circuit (26) ;
- on retire le gabarit et on dispose le ou les éléments optiques dans chaque bloc (29, 30), ceux-ci étant alors alignés avec les entrées et/ou les sorties du circuit (26).

## Description

### Domaine technique

La présente invention concerne un procédé passif de connectorisation d'éléments optiques avec un circuit d'optique intégrée et un gabarit pour la mise en oeuvre de ce procédé.

### Etat de la technique antérieure

Dans le domaine des composants empaquetés, des solutions techniques sont recherchées pour réduire le coût de la connectorisation, qui est un facteur important du coût du composant.

La nécessité d'aligner collectivement et très précisément (à mieux qu'un micromètre) un ensemble d'éléments optiques, par exemple des fibres optiques en face d'un ensemble d'entrées et/ou sorties (par exemple formé par des guides optiques) d'un circuit optique, de manière à limiter au maximum les pertes de couplage, est ainsi à l'origine d'un coût élevé de la connectique.

Même si des solutions actives automatisées (positionnement optimisé en suivant la transmission optique dans le circuit) sont à l'étude, la majorité des recherches se tourne vers des voies de connexion passives et collectives qui présentent des avantages déterminants dans la démarche de réduction des coûts.

Les techniques existantes peuvent ainsi être classées en trois catégories principales :
- une connectique active, qui correspond à un positionnement individuel des fibres optiques en face des microguides, le positionnement étant optimisé par une mesure de transmission optique ;
- une connectique semi-active, qui correspond à un positionnement collectif d'un ensemble de fibres, auparavant alignées de manière passive entre elles, en face des microguides, le positionnement de l'ensemble étant optimisé par une mesure de transmission optique ;
- une connectique passive, qui correspond à un positionnement passif, c'est-à-dire sans aucune mesure optique, de l'ensemble des fibres optiques en face de l'ensemble des microguides, ce positionnement étant contrôlé par des repères mécaniques réalisés sur le circuit en optique intégrée et/ou sur une éventuelle plate-forme supplémentaire destinée à accueillir les fibres optiques.

Dans la suite de la description on ne considère qu'une connectique passive qui, de par sa simplicité de mise en oeuvre lors des étapes de connectorisation, présente des avantages déterminants pour atteindre les objectifs de faible coût. Les principales solutions de connectique passive existantes sont les suivantes :

### a- Solutions de type « flip-chip »

Ces solutions consistent à retourner le circuit en optique intégrée sur une plate-forme, par exemple en silicium (« Silicon MotherBoard »), sur laquelle sont réalisés des motifs, souvent des « V-Grooves » ou « V », en silicium destinés à accueillir des fibres optiques. Ces solutions nécessitent de fabriquer des motifs d'alignement de précision à la fois sur le circuit en optique intégrée et sur la plate-forme d'accueil. De plus, les motifs d'alignement réalisés sur le circuit en optique intégrée doivent être parfaitement positionnés par rapport aux microguides.

Ces V en silicium peuvent être fabriqués à l'aide de techniques connues de gravure humide selon les plans cristallins du silicium, qui sont décrites dans de nombreux articles, comme par exemple dans le document référencé [1] en fin de description. Une de ces techniques consiste à déposer une couche de nitrure Si3N4 sur un substrat de silicium orienté. Une étape de photolithographie permet ensuite de graver ce masque de nitrure en réalisant des motifs alignés selon les plans cristallins du silicium. Les V sont ensuite gravés en trempant la plaquette dans un bain de KOH qui permet une gravure sélective du silicium selon les plans cristallins.

La difficulté principale de fabrication réside dans l'alignement du niveau de photolithographie servant à fabriquer le masque en nitrure avec les plans cristallins du silicium. De cette précision d'alignement dépendent la qualité des V (surfaces lisses sans décrochements) et surtout leur géométrie (largeur, profondeur). Des méthodes particulières ont déjà été proposées dans la littérature pour optimiser cet alignement, notamment dans les documents référencés [2] et [3].

Ces solutions de type « flip-chip » peuvent être améliorées de différentes façons. Ainsi le document référencé [4] décrit un premier exemple qui montre qu'une technologie en optique intégrée peut être adaptée de manière à réaliser des motifs de positionnement sur le circuit en optique intégrée auto-alignés avec les microguides. Ce document décrit également l'utilisation de butées mécaniques auto-alignées avec les bossages des guides d'onde sur un circuit en optique intégrée, pour un positionnement x, avec des structures de microguides différentes. La direction x est dans le plan des couches du circuit d'optique intégrée et perpendiculaire aux axes des guides d'ondes. Mais il n'en reste pas moins que des V de précision doivent être fabriqués pour chaque composant sur la plate-forme en silicium pour assurer un bon alignement perpendiculaire au plan des couches.

### b- Solutions de type « monolithique »

Ces solutions consistent à graver directement les motifs de positionnement des fibres optiques sur les circuits en optique intégrée eux-mêmes, en face des guides optiques. Une seule plaquette est ainsi réalisée. Ces solutions permettent de s'affranchir d'une éventuelle courbure parasite des puces en optique intégrée. Les difficultés principales de ces solutions résident dans la gravure des motifs de précision sur la plaquette en optique intégrée et de leur alignement avec le niveau de photolithographie permettant de réaliser les microguides.

En général, les motifs gravés sont de deux types :
- des V « de précision » obtenus par gravure directe sur le circuit en optique intégrée en face des guides optiques. La société NEC Corporation a développé cette solution en améliorant le dessin des V de positionnement des fibres pour le rendre plus indépendant de la précision de l'orientation du masque de photolithographie par rapport aux plans cristallins, comme décrit dans le document référencé [5]. Néanmoins la difficulté de réalisation des V de précision sur chaque puce existe toujours et la difficulté d'alignement du niveau « microguide » par rapport au niveau « V » reste. De plus la nature du masque, utilisé pour déterminer les zones de gravure des V et réalisé avant le dépôt des couches de silice, impose des conditions sur les paramètres des dépôts et les éventuels traitements thermiques ;
- des U obtenus par gravure directe (gravure SiO2 et Si par exemple) sur le circuit en optique intégrée en face des guides optiques, comme décrit dans le document référencé [6]. L'application de cette méthode à la connectique multifibre démontable nécessite de positionner précisément un plan de référence en x par rapport aux guides optiques. Or, celui-ci dépend non seulement de l'alignement des niveaux de photolithographie, mais également de la qualité de la gravure profonde de la silice qui doit être bien maîtrisée. Enfin, la gravure d'une cavité dans le silicium doit être homogène sur la plaquette et elle doit être contrôlée par un système in situ installé dans l'équipement de gravure.

### c- Autres solutions

D'autres solutions sont proposées par ailleurs.

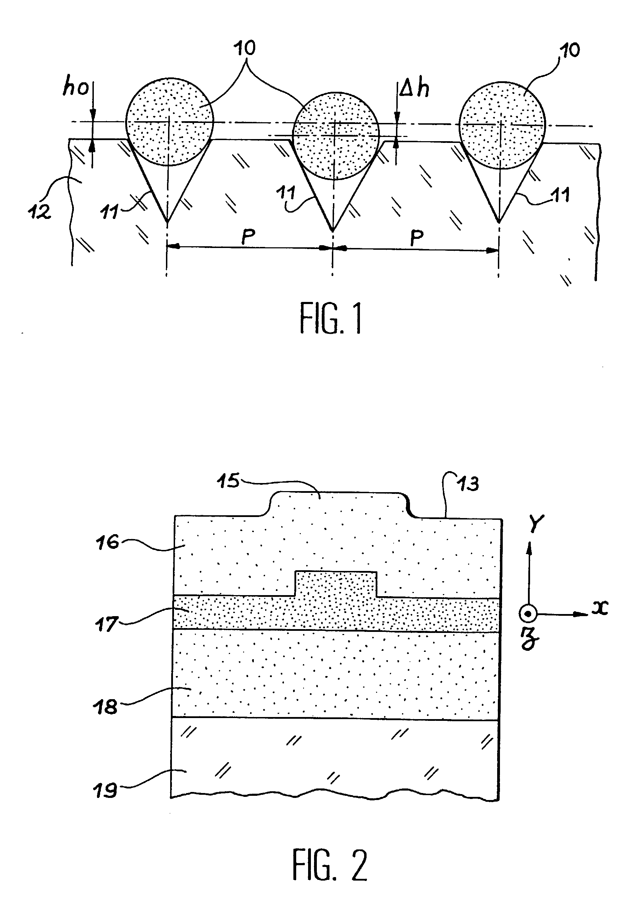

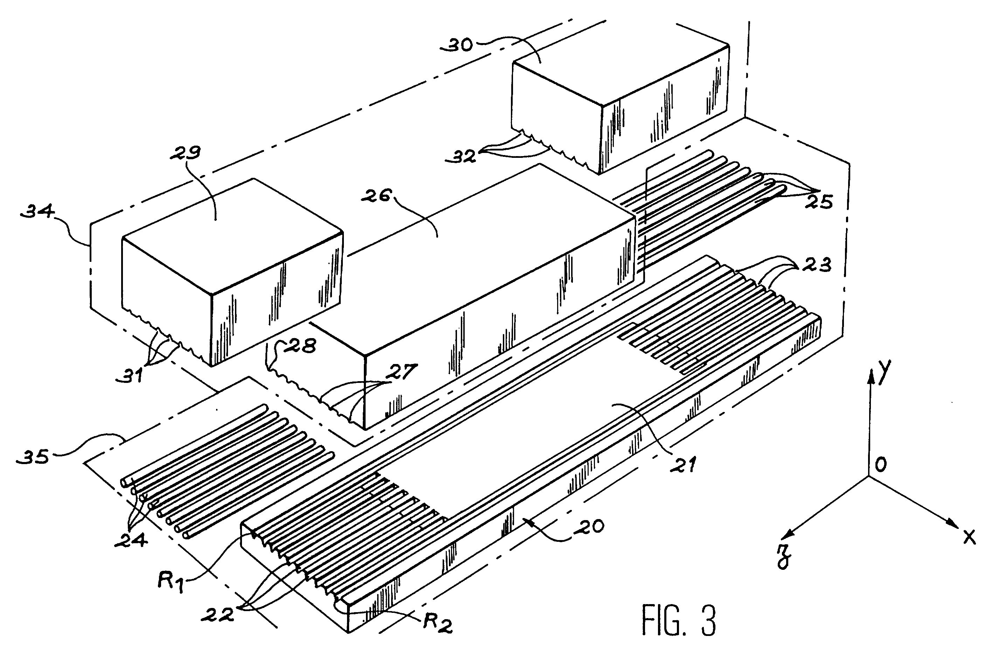

On peut noter par exemple l'utilisation d'une pièce intermédiaire de guidage de l'ensemble de la nappe de fibres par rapport au circuit en optique intégrée. Des motifs de précision sont alors nécessaires à la fois sur le circuit en optique intégrée et sur la pièce intermédiaire. La société NTT utilise cette technique pour connecter des circuits en optique intégrée à des nappes de fibres en utilisant le standard de connecteur MT, comme décrit dans le document référencé [7]. Les figures 1 et 3a de cette publication présentent bien le principe de cette solution. La pièce intermédiaire fabriquée par des techniques de moulage et compatible avec le connecteur MT est positionnée par rapport au circuit en optique intégrée par l'intermédiaire de piges de précision coincées entre des V fabriqués sur le circuit en optique intégrée et des V fabriqués sur la pièce intermédiaire. L'ensemble est ensuite collé. La nappe de fibres incluse dans une fiche de connecteur est guidée sur la pièce intermédiaire par des piges de guidage. Cette méthode nécessite de maîtriser parfaitement les techniques de moulage et de contrôler très précisément les paramètres suivants :
- sur le circuit en optique intégrée : la gravure de V de précision et le positionnement des V par rapport aux microguides ;
- sur la pièce intermédiaire : la fabrication des V de précision, par des techniques de moulage et le positionnement des V par rapport aux trous de guidage ;
- sur la fiche MT : le positionnement des fibres par rapport aux trous de guidage ;
- entre la fiche MT et la pièce intermédiaire : la géométrie des trous et des piges de guidage ;
- la dilatation différentielle des divers éléments réalisés en matériaux différents.

En plus des difficultés présentées par chacune des solutions définies plus haut, différents points critiques communs existent pour ces différentes solutions.

La plupart des solutions présentées ci-dessus nécessitent de graver des repères mécaniques sur la puce en optique intégrée, ces repères devant être positionnés très précisément par rapport aux guides optiques. Une telle précision dépend donc de l'alignement des deux niveaux de photolithographie (gravure microguides et gravure repères) ainsi que du contrôle des cotes lors de la gravure, d'où des sources d'incertitudes importantes. Le problème se pose donc de trouver une méthode qui permette d'obtenir des repères mécaniques auto-alignés avec les guides optiques.

Les solutions de type « flip-chip » nécessitent toutes, dans l'état de l'art actuel, une plate-forme (par exemple une puce en silicium avec des V) très précise, et ce pour chaque circuit en optique intégrée destiné à être connectorisé. Du fait des difficultés technologiques rencontrées pour fabriquer ces plates-formes de précision, ceci a un impact très négatif sur le coût de fabrication du composant connectorisé. Par exemple, dans le cas de V en silicium, l'obtention d'un pas donné et d'une hauteur relative précise entre les V (liés à l'homogénéité de gravure) est bien maîtrisée. En revanche, le contrôle de la valeur absolue de la profondeur des V est beaucoup plus délicat, puisque cette profondeur dépend de l'alignement du niveau de photolithographie avec les plans cristallins du silicium. Ceci rend la fabrication de V de précision difficile et donc chère. Le problème se pose donc de trouver une méthode de connexion qui permette d'éviter l'utilisation systématique de plates-formes de grande précision pour chaque composant connectorisé, afin de réduire le coût du composant final.

La gravure de V sur le circuit en optique intégrée (substrat silicium) est élégante puisqu'elle combine les avantages d'une solution monolithique (une seule plaque réalisée, pas de problème de courbure parasite de la puce, minimum de manipulation lors du montage) et les avantages des V pour le positionnement des fibres optiques. Malheureusement, cette solution présente les inconvénients classiques des solutions précédentes : nécessité de réaliser des V de précision sur chaque puce (coût lié à la difficulté technologique) et difficulté à aligner avec précision les deux niveaux (« microguides » et « V ») par rapport aux plans cristallins du silicium. De plus, l'empilement technologique est relativement lourd et nécessite de graver entièrement la couche de silice en prenant en compte la qualité des sorties optiques.

L'invention a pour objet de résoudre ces différents problèmes en proposant un procédé passif de connectorisation d'éléments optiques avec un circuit d'optique intégrée et un gabarit pour la mise en oeuvre de ce procédé, qui soient à la fois précis et de faible coût.

### Exposé de l'invention

Le procédé de l'invention, qui consiste à connecter à un circuit en optique intégrée un ou plusieurs éléments optiques de façon à ce que les sorties et/ou les entrées respectives soient situées sensiblement dans un même plan (xoz) que des entrées et/ou des sorties de ce circuit situées également dans le même plan (xoz), comporte les étapes suivantes :
- on positionne le circuit (présentant éventuellement des repères mécaniques) sur un gabarit ayant des motifs aptes à permettre un alignement précis ultérieur des éléments optiques avec les entrées et/ou les sorties du circuit ;
- on positionne au moins un bloc, apte à recevoir le ou les éléments optiques, sur le gabarit en regard des entrées et/ou des sorties du circuit, et on le fixe à ce circuit ;
- on retire le gabarit, qui pourra être réutilisé ultérieurement, et on dispose le ou les éléments optiques dans chaque bloc, ceux-ci étant alors alignés avec les entrées et/ou les sorties du circuit.

Avantageusement ledit alignement précis est réalisé selon trois directions, par exemple perpendiculaires (repère Ox,y,z).

Les éléments optiques peuvent être tout composant ou circuit optique aussi bien passif qu'actif (optoélectronique) et par exemple des fibres optiques, des diodes laser, des photodiodes, des amplificateurs optiques, des modulateurs optiques...etc.

Dans le cas des fibres optiques, le gabarit est avantageusement un gabarit « de précision » (V dont le pas, la hauteur relative et la hauteur absolue sont bien contrôlés) comportant une plaquette munie d'une partie apte à recevoir le circuit optique et d'au moins une rangée de V de précision parallèles, dans lesquels on positionne un ensemble de fibres optiques calibrées. On entend par « fibres optiques calibrées » des fibres optiques de même type que les fibres optiques à connecter.

Chaque bloc est un bloc de V « non précis » constitué d'une plaquette munie d'une rangée de V parallèles sur sa surface inférieure apte à venir se positionner sur les fibres optiques calibrées positionnées sur les V du gabarit.

Avantageusement pour le positionnement du circuit sur le gabarit, on utilise au moins un repère mécanique sur le circuit en optique intégrée et au moins un repère mécanique complémentaire sur le gabarit. Le repère mécanique du circuit est avantageusement constitué par une bosse auto-alignée avec un guide d'onde de ce circuit. Pour ce faire on peut utiliser un guide d'onde non fonctionnel réalisé en même temps que les autres guides d'onde du circuit optique, ce guide constituant un excellent repère mécanique parfaitement aligné avec les guides optiques.

Avantageusement le repère mécanique complémentaire sur le gabarit est formé par un « V ».

Dans un exemple de réalisation ledit procédé comporte les étapes suivantes :
- on positionne, et éventuellement on fixe par exemple par collage, au moins un ensemble de fibres optiques calibrées dans les V d'une plaquette munie d'une partie apte à recevoir le circuit optique, et d'au moins une rangée de V de précision parallèles, de manière à former le gabarit ;
- on positionne le circuit en optique intégrée, comportant sur sa face inférieure les entrées et/ou les sorties, à aligner avec le ou les ensembles de fibres optiques, et au moins un repère mécanique sur la partie du gabarit apte à recevoir le circuit ;
- on positionne au moins un bloc muni d'une rangée de V parallèles sur sa face inférieure aptes à venir se positionner sur les fibres optiques calibrées du gabarit situées en regard des entrées et des sorties du circuit, en correspondance aux rangées de V de ce gabarit, et on les fixe, par exemple par collage, au circuit ;
- on retire le gabarit, qui pourra être réutilisé ultérieurement ;
- on place le produit constitué du circuit en optique intégrée et du ou des blocs de V fixés au circuit dans le prolongement de ses entrées et/ou de ses sorties dans un connecteur apte à recevoir et éventuellement presser des fibres optiques dans les V des blocs.

Pour positionner le circuit sur le gabarit on procède avantageusement en deux sous-étapes :
- on dispose grossièrement le circuit sur le gabarit ; et
- on translate mécaniquement le circuit sur le gabarit jusqu'au contact des repères mécaniques complémentaires, ce qui assure le positionnement du circuit par rapport au gabarit.

La présente invention concerne également un gabarit permettant la mise en oeuvre de ce procédé.

En fonction du type d'application considérée ce gabarit peut présenter des motifs très différents. Dans le cas particulier de la connexion de fibres optiques, les motifs du gabarit sont, avantageusement, des « V » réalisés avec précision. A l'intérieur de ces V sont déposées des fibres calibrées. Ce gabarit comporte alors :
- une plaquette sur laquelle sont réalisés ces V de précision ;
- au moins un ensemble de fibres optiques calibrées positionné dans les V de précision et correspondant aux entrées et/ou sorties du circuit en optique intégrée.

A titre d'exemple la plaquette peut être du silicium, du quartz ou encore en matériau céramique.

De façon générale la définition du terme « V » correspond à une forme en creux présentant des parois rectilignes ou non.

La configuration obtenue par le procédé de l'invention ne peut l'être que par deux méthodes : soit par un alignement actif, soit de manière passive en utilisant nécessairement une pièce de montage qui joue le rôle de « Gabarit ». Cette configuration est très différente d'une solution de type « flip-chip » puisque dans le produit final, le circuit en optique intégrée n'est pas en appui sur la surface supérieure des blocs de V. Les trois éléments (bloc de V, circuit en optique intégrée, bloc de V) sont dans le prolongement les uns des autres.

Le procédé de l'invention, ainsi décrit, permet d'obtenir les avantages suivants.

L'alignement des bosses du superstrat situées au-dessus des guides d'onde du circuit en optique intégrée comme référence mécanique latérale et angulaire est parfait puisque ces bosses sont la conséquence de l'existence de ces guides d'onde. Ce positionnement est indépendant d'un éventuel alignement de niveaux de photolithographie ou d'une surgravure. Le procédé de l'invention est donc très avantageux vis-à-vis des solutions connues qui consistent à graver une référence mécanique dans la silice après avoir réalisé l'étape technologique correspondant aux guides optiques. Dans le procédé de l'invention seule la qualité du dépôt de recouvrement doit être bien contrôlée (épaisseur et facteur de recouvrement).

Le procédé de l'invention permet d'obtenir une diminution du coût puisqu'aucune étape supplémentaire n'est nécessaire ni pour fabriquer une bosse, ni pour fabriquer une surface supplémentaire de référence sur le circuit. Cette référence mécanique est obtenue en même temps que la fabrication des microguides.

Le principe du transfert de précision (gabarit) permet d'éviter d'utiliser des blocs comportant des V de précision, donc chers, pour chaque composant en optique intégrée connectorisé. La mise en oeuvre d'un gabarit de haute précision, qui peut être très cher puisqu'il est utilisé pour monter un grand nombre de composants en optique intégrée, permet d'utiliser des blocs de V non précis, donc bon marché, pour monter chacun des composants en optique intégrée.

En outre, le produit obtenu par le procédé de l'invention permet de connecter et déconnecter les éléments optiques selon les besoins.

Enfin le caractère montable et démontable du produit obtenu selon le procédé de l'invention permet une connexion avec des éléments optiques directement sur un site industriel et donc permet un remplacement directement du produit sur le site, si nécessaire.

### Brève description des dessins

- La figure 1 illustre le positionnement de fibres optiques dans les V d'une plaquette et définit les caractéristiques géomériques des V :
   p : pas
   ho : hauteur absolue
   Δh : hauteur relative entre les V ;
- la figure 2 illustre le schéma d'un guide optique comportant un bossage mécanique ;
- la figure 3 illustre les étapes du procédé de l'invention ;
- la figure 4 illustre une vue de détail de l'alignement avec un gabarit selon le procédé de l'invention ;
- les figures 5A à 5C illustrent l'alignement, respectivement selon une coupe longitudinale et deux coupes transversales, des guides d'onde d'entrée et/ou de sortie du circuit en optique intégrée et de fibres optiques calibrées disposées dans les V du gabarit selon le procédé de l'invention.

### Exposé détaillé de modes de réalisation

La figure 1 illustre le positionnement de fibres optiques 10 dans les V 11 formés dans une plaquette 12.

Dans la suite de la description on appelle :
- « V de précision » un ensemble de V dont le pas p (distance entre V adjacents), la hauteur relative Δh (différence de hauteur entre V adjacents) et la hauteur absolue ho sont bien contrôlés, la hauteur absolue étant la distance entre la surface supérieure de la plaquette 12 et l'axe d'une fibre de référence 10 de diamètre connu placée dans un V 11 ;
- « V non précis » un ensemble de V dont seul le pas p et la hauteur relative Δh sont bien contrôlés, la hauteur absolue ho, qui est techniquement le point difficile à obtenir, n'étant alors pas forcément bien contrôlée, ce qui permet d'envisager de fabriquer ces éléments « non précis » à faible coût.

Le procédé de l'invention, qui a pour objet de permettre la connexion d'un ou plusieurs ensembles d'éléments optiques, par exemple d'une ou deux nappes de fibres optiques (réalisation que nous considérerons à titre d'exemple dans la suite), aux entrées et/ou aux sorties d'un circuit en optique intégrée, présente plusieurs caractéristiques avantageuses :
- On utilise des blocs, en silicium par exemple, pour maintenir les nappes de fibres optiques en face des guides optiques en entrée et en sortie du circuit en optique intégrée.
- On utilise un transfert de précision (Gabarit) dans lequel le positionnement du circuit en optique intégrée par rapport aux blocs de maintien de fibres est mécanique, donc passif du point de vue optique. Ce principe permet d'éviter d'utiliser des blocs comportant des V de précision pour chaque composant en optique intégrée connectorisé. La mise en oeuvre d'un gabarit de précision permet d'utiliser des blocs de maintien des fibres non précis, donc bon marché, pour monter chacun des composants en optique intégrée.
- On utilise des repères mécaniques sur le circuit en optique intégrée pour réaliser le positionnement de ce circuit sur le gabarit. Ces repères sont, par exemple, constitués par les bosses 15 du superstrat 16 situé au-dessus des guides d'onde 17 de ce circuit, comme illustré sur la figure 2. Ces repères sont alors parfaitement alignés avec les guides optiques puisqu'ils sont la conséquence de leur existence (recouvrement de la marche). A titre d'exemple, sur cette figure 2 sont représentées le substrat 19 en silicium par exemple, une première couche 18 en silice par exemple, une couche guidante 17 gravée, la couche de recouvrement ou superstrat 16, avec le bossage 15. On pourrait dans un autre mode de réalisation de guide d'onde ne pas graver la couche guidante mais le superstrat. Dans le procédé de l'invention on peut avantageusement réaliser un guide d'onde non fonctionnel en même temps que les guides d'onde du circuit optique (même niveau de photolithographie). Ce guide constitue alors un excellent repère mécanique parfaitement aligné avec les guides optiques.

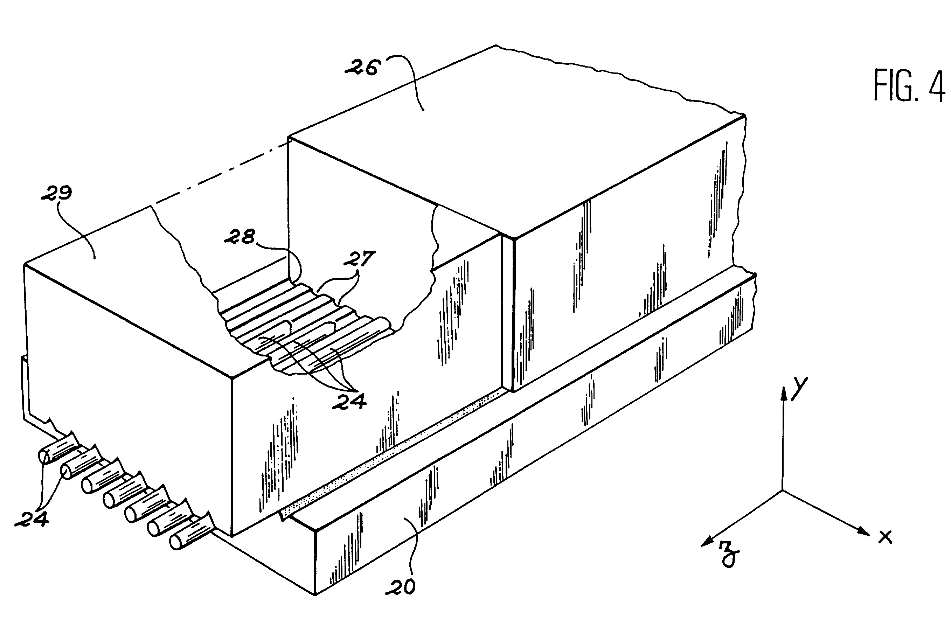

Selon un mode de réalisation du procédé de l'invention, comme illustré sur les figures 3 et 4 :
- on positionne et on fixe éventuellement deux ensembles de fibres optiques calibrées 24 et 25 du même type ou non que celles à connecter dans les V d'une plaquette 20 munie d'une partie apte à recevoir le circuit optique et qui, dans cet exemple, est de forme plane centrale ou « cuve » 21, et de deux rangées de V 22 et 23 parallèles en ses deux extrémités, formant ainsi un gabarit 35 (sur la figure 3, le gabarit comporte deux repères mécaniques R1, R2, pour le positionnement du circuit optique, qui sont des V situés de part et d'autre des deux rangées 22 et 23 qui sont destinées au positionnement des blocs 29 et 30) ;
- on dispose sur le gabarit 35 le circuit en optique intégrée 26, comportant sur sa face inférieure les entrées et/ou sorties 27, à aligner avec les deux ensembles de fibres optiques et éventuellement un guide d'alignement 28 à disposer dans R1 ;
- on translate mécaniquement le circuit optique sur le gabarit jusqu'au contact des références nécessaires respectives , c'est-à-dire le 28 sur la paroi de R1, ce qui assure le positionnement du circuit par rapport au gabarit ;
- on dispose deux blocs 29 et 30, chacun muni d'une rangée de V 31 (32) parallèles sur leurs surfaces inférieures aptes à venir se positionner sur les fibres optiques calibrées fixées dans le gabarit, au regard des entrées et des sorties du circuit, en correspondance aux rangées de V 22 et 23 du gabarit, et on les fixe audit circuit ;
- on retire le gabarit 35, qui pourra être réutilisé ultérieurement ;
- on place le produit final 34 constitué du circuit en optique intégrée 26 et des deux blocs 29 et 30 de V (non précis) fixés aux deux extrémités du circuit en optique intégrée dans le prolongement des guides optiques d'entrée et de sortie, dans un connecteur apte à recevoir et éventuellement presser les fibres optiques à connecter dans les V des deux blocs.

Les deux blocs de V 29 et 30 sont ainsi destinés à recevoir les fibres optiques à connecter, une fois l'ensemble placé dans le connecteur, ces fibres étant alors alignées avec les entrées et/ou les sorties du circuit. Le gabarit est uniquement utilisé pour monter précisément ensemble les trois pièces précédentes 26, 29 et 30.

Le gabarit 35, utilisé lors du montage, est ainsi composé de trois éléments principaux :
- la plaquette 20, par exemple en silicium, sur laquelle sont réalisés les V de précision 22 et 23 et les repères mécaniques pour le positionnement du circuit ;
- le premier ensemble de fibres optiques calibrées 24 (diamètre 125 µm par exemple) fixées dans les V de précision et correspondant aux entrées et/ou sorties du circuit en optique intégrée 26 ;
- le second ensemble de fibres optiques calibrées 25 (diamètre 125 µm par exemple) fixées dans les V de précision et correspondant aux entrées et/ou sorties du circuit en optique intégrée 26.

Les points particuliers à contrôler sur ces différentes pièces sont les suivants :
- pour le circuit en optique intégrée 26 : uniquement l'épaisseur du superstrat et la reproductibilité du recouvrement des marches gravées ;
- pour chaque bloc 29 et 30 : le pas et la hauteur relative des V ;
- pour la plaquette 20 : le pas, la hauteur relative et la hauteur absolue des V (22, 23, R1, R2).

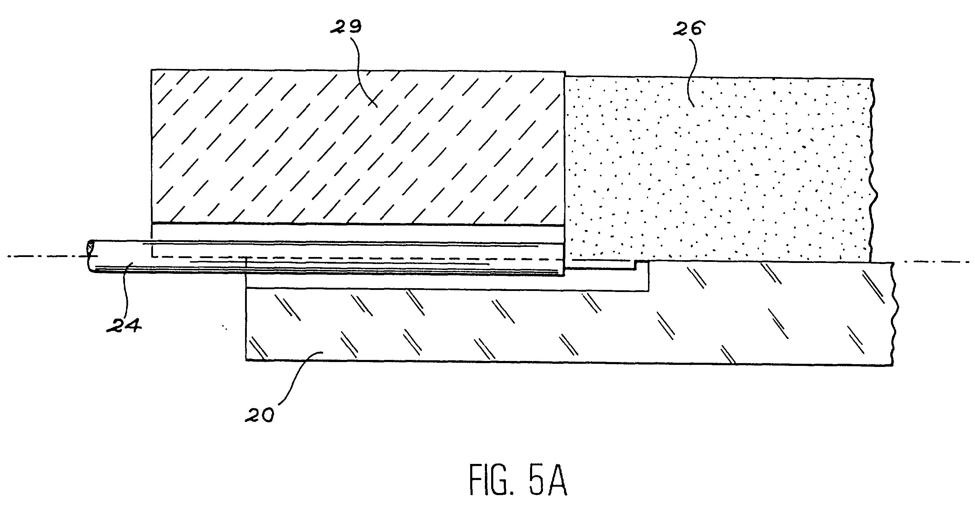

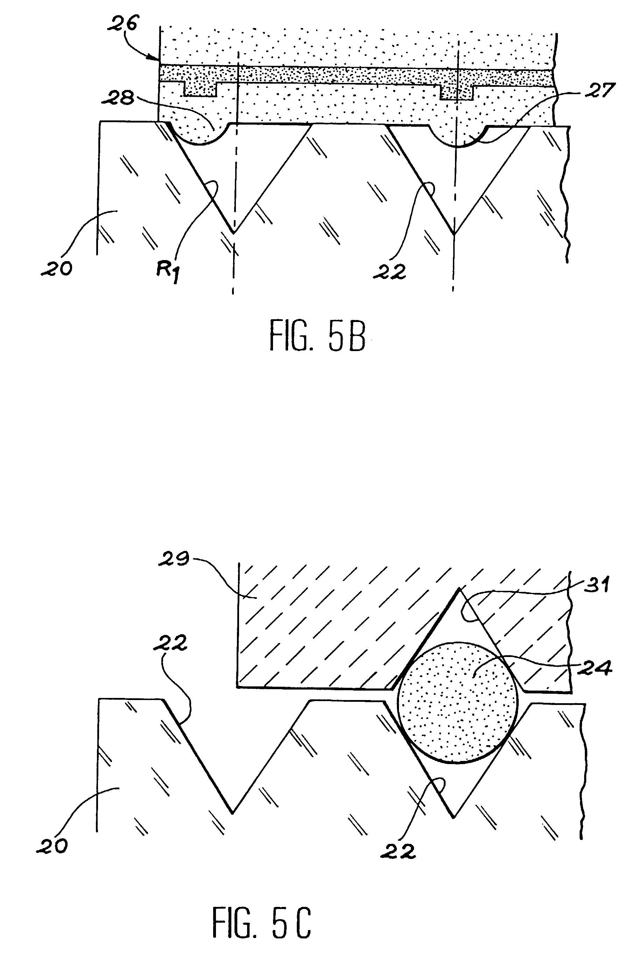

Les repères mécaniques sur les blocs de V 29 et 30 sont les flancs des V. Sur le circuit en optique intégrée 26, les repères mécaniques sont la surface supérieure du superstrat 13 (figure 2) ainsi que les bosses 27 et 28 générées à la surface du superstrat par le recouvrement (superstrat) des guides d'onde préalablement gravés. Ces repères mécaniques assurent les positionnements verticaux et latéraux des blocs de V 29 et 30 et du circuit en optique intégrée 26, comme illustré sur les figures 5A à 5C. La figure 5B montre que c'est la mise en butée de 28 le long du flan du « V » R1 qui assure le positionnement latéral (x). La figure 5C montre que le bloc 29 n'est pas en contact avec la surface du gabarit puisque la référence mécanique est la fibre. Le positionnement longitudinal (axe des fibres ou des guides) est réalisé par contact entre les pièces 29, 30 et 26 qui sont alors fixées entre elles, par exemple par collage.

Dans le cadre de l'invention la fabrication des blocs de V « non précis » 29 et 30 peut être effectuée de manière classique puisque le contrôle de la profondeur absolue des V n'est pas nécessaire. Pour ce qui est du gabarit, sa fabrication doit permettre d'obtenir quelques composants avec une profondeur absolue bien déterminée. On peut éventuellement mettre en oeuvre des techniques d'alignement précis pour avoir un rendement meilleur. Mais il est également possible d'envisager de mettre en oeuvre des techniques classiques, à condition de réaliser des modifications sur le masque (ouvertures de V de différentes largeurs) de manière à compenser les défauts d'alignement par rapport aux plans cristallographiques. Le rendement est alors plus faible, mais on rappelle que l'objectif est d'obtenir seulement quelques gabarits répondant aux caractéristiques désirées, même si cela nécessite d'en fabriquer un nombre important, ces quelques gabarits étant réutilisés un grand nombre de fois pour fabriquer de nombreux composants connectorisés.

L'invention peut comporter de nombreuses variantes de réalisations. Ainsi plusieurs types de repères mécaniques peuvent être utilisés sur le gabarit :
- des V de précision (comme décrit précédemment) ;
- des rainures en U, qui peuvent être réalisées par des méthodes différentes : gravure silice, gravure silicium, usinage laser... ;
- des marches de précision ;
- une empreinte de la surface du superstrat d'un circuit en optique intégrée ;
- des fibres optiques ou toutes autres piges calibrées, plaquées et fixées dans les V ou rainures en U ;
- des billes de précision, plaquées et fixées dans les V ou rainures en U ;

Les repères mécaniques sur le circuit peuvent être :
- les bosses des guides fonctionnels ;
- la bosse d'un guide supplémentaire de positionnement sans fonction optique ;
- la surface supérieure du superstrat (au sommet ou à la base des guides) ;
- les guides dégagés de leur superstrat ;
- ou tout autre type de butée.

D'autres matériaux que le silicium peuvent être utilisés pour le gabarit : plastique (moulage), céramique, verre, ou autre.....

Le bossage caractéristique de la présence d'un guide optique peut éventuellement être obtenu par une autre technologie optique intégrée que la technologie sur silicium.

Le procédé de l'invention peut également s'appliquer à l'alignement d'autres composants optiques, par exemple tout composant ou circuit optique aussi bien passif qu'actif (optoélectronique) : fibres optiques, diodes laser, photodiodes, amplificateurs optiques, modulateurs optiques.....

Dans un exemple de réalisation, le circuit en optique intégrée est un diviseur 1→8 avec 8 voies espacées de 250 µm. Il est déposé sur le gabarit en maintenant la butée mécanique de la bosse d'un guide supplémentaire (guide droit) contre un flanc de V du gabarit. La mise en oeuvre de cette butée a été réalisée pour une hauteur de bosse de 2,5 µm.

Les blocs de V (huit V espacés de 250 µm) sont déposés sur le gabarit suivant les repères mécaniques assurant les alignements latéraux et verticaux (fibres optiques calibrées). Il sont ensuite rapprochés du circuit en optique intégré jusqu'à obtenir le contact puis ils sont fixés à celui-ci, par exemple par collage.

L'ensemble constitué du diviseur 1→8 et des deux blocs de V est alors placé dans un connecteur apte à recevoir des fiches supportant des nappes de huit fibres optiques en entrée et en sortie.

Pour la réalisation des « V », l'invention utilise par exemple la technique de gravure décrite précédemment : voir en particulier les documents référencés [1], [2] et [3] suivant la précision désirée.

### REFERENCES

[1] « Silicon As A Mechanical Material » de K.E.Petersen (Proceedings Of The IEEE, Volume 70, n° 5, mai 1982)
[2] « An Improved Method To Align Etchmasks To The <110> Orientation » de H. Schröder, O. Dorsch et E. Obermeier (« 5th International Conference On Micro Electro Opto Mechanical Systems And Components », Postdam, 17-19 septembre 1996)
[3] « High Precision Wafer Orientation For Micromachining » de A. Steckenborn, T. Winckler, G. Jantke, F. Arndt et H.F. Schlaak (« Micro System Technologies 91 », pages 467-471 (1991))
[4] « Silica On Si Waveguides For Self-Aligned Fibre Array Coupling Using flip-chip Si V-Groove Technique » de Q. Lai, W. Hunzicker et H. Melchior (« Electronics Letters », 26 septembre 1996, volume 32, n° 20)
[5] « Silica Based Optical Waveguide Devices, With Novel Fiber Guide Structure For Alignment-Free Fiber Coupling » de N. Kitamura, S. Mizuta, T. Shimoda et M. Kitamura (Integrated Photonics Research 96 », 29 avril 1996, 1996 Technical Digest Series, Volume 6, pages 608-611)
[6] « Fiber Pigtailed Wavelength Multiplexer/ Demultiplexer At 1.55 Microns Integrated On Silicon Substrate » de G. Grand, J.P Jadot, S. Valette, H. Denis, A. Fournier et A.M. Grouillet (« 7th Annual European Fibre Optic Communications And Local Area Network Conference », EFOC-LAN 90, Munich (D), pages 108-113, 25-29 juin 1990)
[7] « An Easily-Assembled Optical Device For Coupling Single-Mode Planar Waveguides To A Fiber Array » de M. Takaya, M. Kihara et S. Nagasawa (« Integrated Photonics Research 96 », 29 avril 1996, 1996 Technical Digest Series, Volume 6, pages 561-564)

## Revendications

1. Procédé de connectorisation d'éléments optiques avec un circuit en optique intégrée (26) consistant à connecter à ce circuit au moins un élément optique de façon que les sorties et/ou les entrées respectives soient situées sensiblement dans un même plan (xoz) que des entrées et/ou des sorties de ce circuit situées également dans le même plan (xoz), caractérisé en ce qu'il comporte les étapes suivantes :
- on positionne le circuit (26) sur un gabarit (35) ayant des motifs aptes à permettre un alignement précis ultérieur des éléments optiques avec les entrées et/ou les sorties du circuit (26) ;
- on positionne au moins un bloc (29, 30), apte à recevoir le ou les éléments optiques, sur le gabarit (35) en regard des entrées et/ou des sorties du circuit (26), et on le fixe à ce circuit (26) ;
- on retire le gabarit (35) et on dispose le ou les éléments optiques dans chaque bloc (29, 30), ceux-ci étant alors alignés avec les entrées et/ou les sorties du circuit (26).

2. Procédé selon la revendication 1, dans lequel ledit alignement précis est réalisé selon trois directions.

3. Procédé selon la revendication 1, dans lequel leséléments optiques sont des fibres optiques.

4. Procédé selon la revendication 1, dans lequel les éléments optiques sont des composants actifs.

5. Procédé selon la revendication 1, dans lequel les éléments optiques sont des circuits en optique intégrée.

6. Procédé selon la revendication 3, dans lequel le gabarit est un gabarit de précision comportant une plaquette (20) munie d'une partie (21) apte à recevoir le circuit optique et d'au moins une rangée de V de précision parallèles (22, 23), dans lesquelles on positionne un ensemble de fibres optiques calibrées (24, 25).

7. Procédé selon la revendication 6, dans lequel chaque bloc est un bloc de V non précis (29, 30) constitué d'une plaquette munie d'une rangée de V (31, ou 32) parallèles sur sa surface inférieure apte à venir se positionner sur les fibres optiques calibrées (24, 25) positionnées sur les V (22, 23) du gabarit (35).

8. Procédé selon la revendication 1, dans lequel, pour le positionnement du circuit (26) sur le gabarit (35), on utilise au moins un repère mécanique sur le circuit en optique intégrée et au moins un repère mécanique complémentaire sur le gabarit.

9. Procédé selon la revendication 8, dans lequel chaque repère mécanique du circuit est constitué par une bosse (15) autoalignée avec un guide d'onde (17) de ce circuit.

10. Procédé selon la revendication 8, dans lequel le repère mécanique complémentaire sur le gabarit est formé par un « V ».

11. Procédé selon la revendication 8, dans lequel on utilise un guide d'onde non fonctionnel réalisé en même temps que les autres guides d'onde du circuit (26), ce guide constituant un repère mécanique parfaitement aligné avec les guides optiques.

12. Procédé selon la revendication 3, dans lequel on a les étapes suivantes :
- on positionne au moins un ensemble de fibres optiques calibrées (24, 25), dans les V d'une plaquette (20) munie d'une partie (21) apte à recevoir le circuit optique, et au moins une rangée de V de précision parallèles (22, 23), de manière à former le gabarit (35) ;
- on positionne le circuit en optique intégrée (26), comportant sur sa face inférieure les entrées et/ou les sorties, à aligner avec le ou les ensembles de fibres optiques, et au moins un repère mécanique sur la partie (21) du gabarit (35) apte à recevoir le circuit ;
- on positionne au moins un bloc (29 et 30) muni d'une rangée de V parallèles (31, 32) sur sa face inférieure aptes à venir se positionner sur les fibres optiques calibrées (24, 25) du gabarit (35) situées en regard des entrées et des sorties du circuit, en correspondance aux rangées de V (22, 23) de ce gabarit et on les fixe au circuit (26) ;
- on retire le gabarit (35) ;
- on place le produit constitué du circuit en optique intégrée (26) et du ou des blocs de V (29, 30) fixés au circuit dans le prolongement de ses entrées et/ou de ses sorties, dans un connecteur apte à recevoir des fibres optiques à connecter dans les V des blocs.

13. Procédé selon la revendication 12, dans lequel pour positionner le circuit sur le gabarit on procède en deux sous-étapes :
- on dispose grossièrement le circuit sur le gabarit ; et
- on translate mécaniquement le circuit sur le gabarit jusqu'au contact des repères mécaniques complémentaires, ce qui assure le positionnement du circuit par rapport au gabarit.

14. Gabarit pour la mise en oeuvre du procédé selon l'une quelconque des revendications 1 à 13, comportant :
- une plaquette (20), sur laquelle sont réalisés des V de précision (22, 23) ;
- au moins un ensemble de fibres optiques calibrées (24) positionnées dans les V de précision et correspondant aux entrées et/ou sorties du circuit en optique intégrée (26).
